(19) Europäisches Patentamt
European Patent Office
Office européen des brevets

(11) **EP 4 296 705 A1**

(12) **EUROPEAN PATENT APPLICATION**

(43) Date of publication:
**27.12.2023 Bulletin 2023/52**

(51) International Patent Classification (IPC):
**G01S 5/02** (2010.01)

(21) Application number: **22180988.2**

(52) Cooperative Patent Classification (CPC):
**G01S 5/0215; G01S 5/0244**

(22) Date of filing: **24.06.2022**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nokia Technologies Oy
02610 Espoo (FI)**

(72) Inventors:
• **BARBU, Oana-Elena
Aalborg (DK)**
• **KEATING, Ryan
Chicago (US)**
• **HARREBEK, Johannes
Aalborg (DK)**
• **VEJLGAARD, Benny
Gistrup (DK)**

(74) Representative: **Whiting, Gary et al
Venner Shipley LLP
5 Stirling House
Stirling Road
The Surrey Research Park
Guildford GU2 7RF (GB)**

(54) **POSITIONING INFORMATION**

(57)    A method, apparatus and computer program is described comprising: obtaining samples of received positioning information from each of a plurality of channels; identifying one or more of said channels as benchmark channels; determining a benchmark channel response representative of channel propagation conditions for the or each benchmark channel; generating a common benchmark channel response based on said benchmark channel responses; estimating channel responses for some or all non-benchmark channels; modifying positioning information samples of at least some of the non-benchmark channels to generate corrected positioning information samples; and combining the positioning information samples of said one or more benchmark channels and the one or more corrected positioning information samples to generate combined positioning information samples.

FIG. 7

EP 4 296 705 A1

## Description

### Field

The present specification relates the use and processing of positioning information, for example in mobile communication systems.

### Background

The use of positioning information (such as positioning reference signals and sounding reference signals) for use in estimating the positions of user devices of a mobile communication system is known. There remains a need for further developments in this field.

### Summary

A method, apparatus and computer program is described comprising: obtaining samples of received positioning information from each of a plurality of channels; identifying one or more of said channels as benchmark channels; determining a benchmark channel response representative of channel propagation conditions for the or each benchmark channel; generating a common benchmark channel response based on said benchmark channel responses; estimating channel responses for some or all non-benchmark channels; modifying positioning information samples of at least some of the non-benchmark channels to generate corrected positioning information samples; and combining the positioning information samples of said one or more benchmark channels and the one or more corrected positioning information samples to generate combined positioning information samples.

In a first aspect, this specification describes an apparatus (e.g. a user equipment of a mobile communication system or a communication node of a mobile communication system) comprising means for performing: obtaining samples of received positioning information from each of a plurality of channels, each channel having a band identified by a carrier frequency; identifying one or more of said channels as benchmark channels, wherein each benchmark channel has a relatively high (e.g. higher) determined quality compared with non-benchmark channels (said quality may be determined, for example, by measurements such as SINR, RSRP or the like); determining a benchmark channel response representative of channel propagation conditions for the or each benchmark channel; generating a common benchmark channel response based on said benchmark channel responses; estimating channel responses for some or all of the non-benchmark channels, based, at least in part, on the common benchmark channel response; determining differences between reconstructed positioning information samples derived using said estimated non-benchmark channel responses and received positioning information samples for the same channels; modifying positioning information samples of at least some of the non-benchmark channels based on said determined differences to generate corrected positioning information samples; and combining the positioning information samples of said one or more benchmark channels and the one or more corrected positioning information samples to generate combined positioning information samples (e.g. by averaging, superimposition and/or pruning of said samples). The positioning information maybe positioning reference signals (PRS), sounding reference signals (SRS) or similar signals. The positioning information may, for example, be sent as uplink, downlink or sidelink signals. The said non-benchmark channels may be considered to be "corrupted channels" in some example embodiments.

The apparatus may further comprise means for performing: determining a position estimate based on said combined positioning information samples.

Some example embodiments further comprise means for performing: ranking said channels in decreasing order of determined quality.

The benchmark channels may comprise a predefined number of channels. Alternatively, the benchmark may channels comprise all channels having a determined quality above a threshold quality. The quality threshold may be a fixed threshold. Thus, in some example embodiments, the number of benchmark channels may be variable, depending on the circumstances.

A channel estimator module may be provided that is configured to determine the benchmark channel response for the or each benchmark channel.

In some example embodiments, the common benchmark channel response excludes, reduces or compensates for at least some band-specific non-linearities of said benchmark channel responses. Such non-linearities may include one or more of Doppler Shift, carrier frequency offset etc. In some example embodiments, the non-linearities may be known. Alternatively, or in addition, the non-linearities may be estimated.

The estimated channel responses for some or all of the non-benchmark channels may be based, at least in part, on at least some band-specific non-linearities for the respective non-benchmark channels.

In some example embodiments, the channels comprise contiguous intra-band carriers.

Some example embodiments further comprise means for performing: omitting positioning information derived from one or more of said non-benchmark channels from said combined positioning information samples dependent on the quality of the respective non-benchmark channels. Positioning information maybe omitted, for example, if the quality of the respective non-benchmark channels is below a lower threshold.

The said means comprise: at least one processor; and at least one memory including computer program code. The at least one memory and computer program code may be configured to, with the at least one processor, cause the performance of the apparatus.

In a second aspect, this specification describes a method comprising: obtaining samples of received positioning information (e.g. PRS, SRS or similar signals) from each of a plurality of channels, each channel having a band identified by a carrier frequency; identifying one or more of said channels as benchmark channels, wherein each benchmark channel has a relatively high (e.g. higher) determined quality compared with non-benchmark channels (said quality may be determined, for example, by measurements such as SINR, RSRP or the like); determining a benchmark channel response representative of channel propagation conditions for the or each benchmark channel; generating a common benchmark channel response based on said benchmark channel responses; estimating channel responses for some or all of the non-benchmark channels, based, at least in part, on the common benchmark channel response; determining differences between reconstructed positioning information samples derived using said estimated non-benchmark channel responses and received positioning information samples for the same channels; modifying positioning information samples of at least some of the non-benchmark channels based on said determined differences to generate corrected positioning information samples; and combining the positioning information samples of said one or more benchmark channels and the one or more corrected positioning information samples to generate combined positioning information samples (e.g. by averaging, superimposition and/or pruning of said samples). The positioning information may, for example, be sent as uplink, downlink or sidelink signals.

The method may further comprise determining a position estimate based on said combined positioning information samples.

Some example embodiments further comprise ranking said channels in decreasing order of determined quality.

The benchmark channels may comprise a predefined number of channels. Alternatively, the benchmark may channels comprise all channels having a determined quality above a threshold quality (e.g. a fixed threshold).

In some example embodiments, the common benchmark channel response excludes, reduces or compensates for at least some band-specific non-linearities of said benchmark channel responses.

The estimated channel responses for some or all of the non-benchmark channels may be based, at least in part, on at least some band-specific non-linearities for the respective non-benchmark channels.

In some example embodiments, the channels comprise contiguous intra-band carriers.

Some example embodiments further comprise: omitting positioning information derived from one or more of said non-benchmark channels from said combined positioning information samples dependent on the quality of the respective non-benchmark channels.

In a third aspect, this specification describes computer-readable instructions which, when executed by a computing apparatus, cause the computing apparatus to perform (at least) any method as described with reference to the second aspect.

In a fourth aspect, this specification describes a computer-readable medium (such as a non-transitory computer-readable medium) comprising program instructions stored thereon for performing (at least) any method as described with reference to the second aspect.

In a fifth aspect, this specification describes an apparatus comprising: at least one processor; and at least one memory including computer program code which, when executed by the at least one processor, causes the apparatus to perform (at least) any method as described with reference to the second aspect.

In a sixth aspect, this specification describes a computer program comprising instructions for causing an apparatus to perform at least the following: obtaining samples of received positioning information from each of a plurality of channels, each channel having a band identified by a carrier frequency; identifying one or more of said channels as benchmark channels, wherein each benchmark channel has a relatively high (e.g. higher) determined quality compared with non-benchmark channels; determining a benchmark channel response representative of channel propagation conditions for the or each benchmark channel; generating a common benchmark channel response based on said benchmark channel responses; estimating channel responses for some or all of the non-benchmark channels, based, at least in part, on the common benchmark channel response; determining differences between reconstructed positioning information samples derived using said estimated non-benchmark channel responses and received positioning information samples for the same channels; modifying positioning information samples of at least some of the non-benchmark channels based on said determined differences to generate corrected positioning information samples; and combining the positioning information samples of said one or more benchmark channels and the one or more corrected positioning information samples to generate combined positioning information samples.

In a seventh aspect, this specification describes: an input (or some other means) for obtaining samples of received positioning information from each of a plurality of channels, each channel having a band identified by a carrier frequency; a first processor (or some other means) for identifying one or more of said channels as benchmark channels, wherein each benchmark channel has a relatively high (e.g. higher) determined quality compared with non-benchmark channels; a channel estimator module (or some other means) for determining a benchmark channel response representative of channel propagation conditions for the or each benchmark channel; a second processor (or some other means) for generating a common benchmark channel response based on said benchmark channel responses; a third processor (or some other means) for estimating channel responses for some or all of the non-benchmark channels, based, at least in part, on the common benchmark channel response; a comparison module (or some other means) for determining differences between reconstructed positioning information samples derived using said estimated non-benchmark channel responses and received positioning information samples for the same channels; a fourth processor (or some other means) for modifying positioning information samples of at least some of the non-benchmark channels based on said determined differences to generate corrected positioning information samples; and a fifth processor (or some other means) for combining the positioning information samples of said one or more benchmark channels and the one or more corrected positioning information samples to generate combined positioning information samples. Of course, the functionality of one or more of the processors or modules described above maybe provided the same processor or module in some example embodiments.

**Brief description of the drawings**

Example embodiments will now be described, by way of example only, with reference to the following schematic drawings, in which:

FIGS. 1 and 2 are block diagrams of systems used in example embodiments;
FIG. 3 is a block diagram of a system in accordance with an example embodiment;
FIG. 4 is a flow chart showing an algorithm in accordance with an example embodiment;
FIG. 5 is a block diagram of a system in accordance with an example embodiment;
FIGS. 6 to 8 are flow charts showing algorithms in accordance with example embodiments;
FIG. 9 is a plot showing performance comparisons including an example embodiment;
FIG. 10 is a block diagram of components of a system in accordance with an example embodiment; and
FIG. 11 shows an example of tangible media for storing computer-readable code which when run by a computer may perform methods according to example embodiments described above.

**Detailed description**

The scope of protection sought for various embodiments of the invention is set out by the independent claims. The embodiments and features, if any, described in the specification that do not fall under the scope of the independent claims are to be interpreted as examples useful for understanding various embodiments of the invention.

In the description and drawings, like reference numerals refer to like elements throughout.

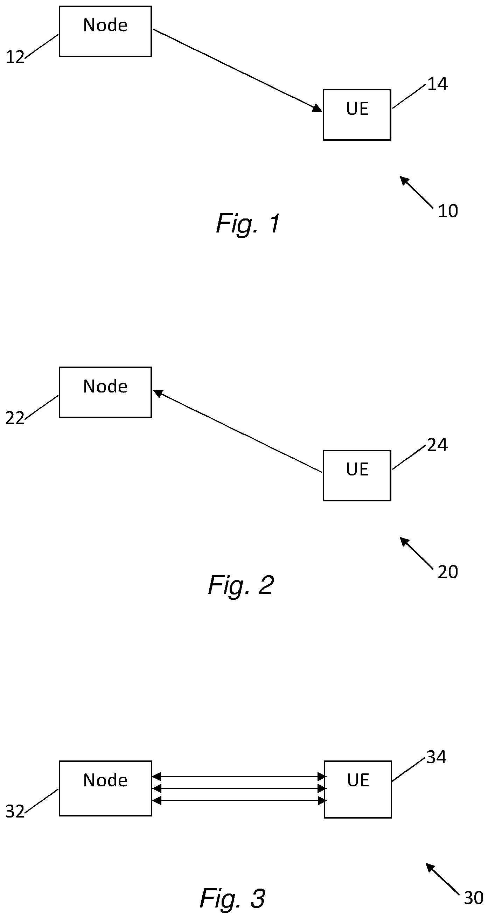

FIG. 1 is a block diagram of a system, indicated generally by the reference numeral 10, used in example embodiments. The system 10 comprising a node 12 of a mobile communication system and a user device 14 of the mobile communication system. The node 12 may be a global node B (gNB) and the user device 14 may be a user equipment (UE), but the principles described herein are applicable more generally to different communication systems.

In the system 10, the node 12 is transmitting a positioning reference signal (PRS) or similar signal to the user device 14. The positioning signal has known properties, which can be compared with the properties of the signal received at the user device 14 and used in algorithms for estimating the position of the user device 14. For example, data such as downlink time difference of arrival (DL-TDOA), downlink angle of departure (DL-AoD) and downlink reference signal received power (DL-RSRP) can be used in positioning algorithms. In some example embodiments, a dedicated location management function (LMF) is provided to estimate the locations of multiple user devices of a mobile communication system.

FIG. 2 is a block diagram of a system, indicated generally by the reference numeral 20, used in example embodiments. The system 10 comprises a node 22 and user device 24 that are similar to the node 12 and the user device 14 described above.

In the system 20, the user device 24 is transmitting a sounding reference signal (SRS) of similar signal to the node 22. As with the positioning reference signal described above, the sounding reference signal has known properties, which can be compared with the properties of the signal received at the node 22 and used in algorithms for estimating the position of the user device 24. For example, data such as uplink time difference of arrival (UL-TDOA), uplink angle of arrival (DL-AoA) and uplink reference signal received power (UL-RSRP) can be used in positioning algorithms.

One approach for seeking to increase accuracy of positioning estimates is to make use of bandwidth aggregation so that multiple positioning signals can be transmitted across multiple frequency bands at the same time. For example, bandwidth aggregation may offer improvement relating to positioning accuracy, reduced latency, improved network and/or device efficiency.

FIG. 3 is a block diagram of a system, indicated generally by the reference numeral 30, used in example embodiments. The system 30 comprises a node 32 of a mobile communication system and a user device 34 of the mobile communication system. As with the systems 10 and 20 described above, the node 32 maybe a global node B (gNB) and the user device 34 may be a user equipment (UE), but the principles described herein are applicable more generally to different communication systems.

The system 30 includes a plurality of carriers for communications between the node 32 and the user device 34. Thus, for example, the system enables one or more of:

- Simultaneous transmission by the node 32 and aggregated reception at a user device 34 of multiple positioning references signals (PRS) or similar signals across multiple carriers (e.g. contiguous carriers).
- Simultaneous transmission by the user device 34 and aggregated reception by the node 32 of sounding reference signals (SRS) or similar signals across multiple carriers (e.g. contiguous carriers).

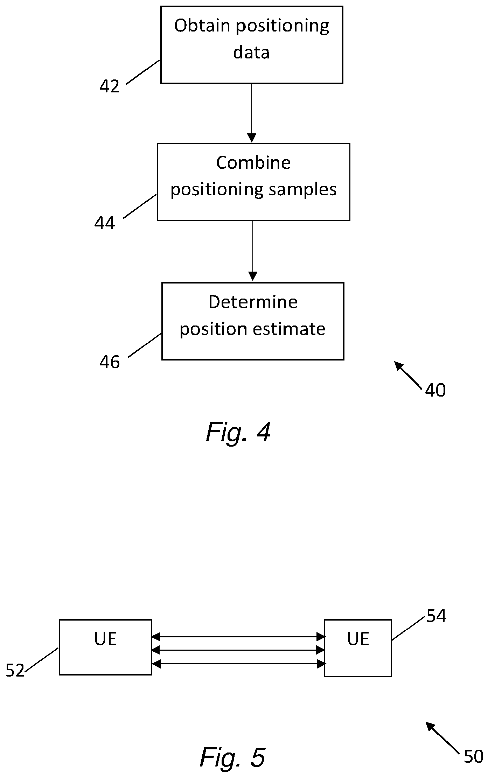

FIG. 4 is a flow chart showing an algorithm, indicated generally by the reference numeral 40, in accordance with an example embodiment. The algorithm 40 may be implemented by the system 30 described above.

The algorithm 40 starts at operation 42, where positioning data are obtained. For example, samples of received positioning information may be obtained from each of a plurality of channels, each channel having a band identified by a carrier frequency. The data (e.g. PRS data) may be transmitted by the node 32 and sampled at the user device 34. Alternatively, the data (e.g. SRS data) may be transmitted by the user device 34 and sampled at the node 32.

At operation 44 of the algorithm 40, the positioning data obtained in the operation 42 are merged or otherwise combined.

Finally, at operation 46, a position estimate is determined based on the combined/merged positioning data.

FIG. 5 is a block diagram of a system, indicated generally by the reference numeral 50, used in example embodiments. The system 50 comprises a first user device 52 and a second user device 54. Either user device may provide signals to the other as part of sidelink communications that can, for example, be used for positioning purposes. Thus, the principles of the algorithm 40 can be applied to sidelink communications; for example, data may be transmitted via side links by one of the user devices 52 and 54, and sampled at the other of the user devices 52 and 54.

As discussed above, the aggregation of positioning data may improve positioning accuracy, but this is not always the case.

According to the current positioning reference signals (PRS) definition (see TS 38.211), a PRS signal sent by a gNB is orthogonalized in time-frequency and code with:

- other PRS signals (e.g. PRS signals sent by other gNBs); and
- the synchronization signal blocks (SSBs) sent by the same gNB.

This means that positioning reference signals (PRS) and synchronisation signal blocks (SSBs) from different gNBs may use the same PRBs and cause co-channel interference at a target UE. This situation may cause the target UE to fail to decode the PRS correctly (and hence fail to compute reliable positioning measurements). Ultimately, this can result in inaccurate position estimates.

When carrier aggregation (CA) is used for PRS transmission, this problem can be increased. SSBs are likely to interfere more than one component carrier of the PRS, rendering the extended bandwidth of limited or no value.

A straightforward solution would be to orthogonalize positioning signals (e.g. PRS) with respect to all other data or control signals. This solution is however not scalable, since a single target user device/user equipment will typically receive positioning signals from multiple sources, on multiple carriers and from multiple spatial directions. A method for positioning measurement collection in a carrier aggregation (CA) scenario is described in detail below. The method is generally described as being implemented at a user device (e.g. using downlink (DL) signals), but may also be used in either sidelink-carrier aggregation positioning or uplink-carrier aggregation positioning.

The method builds on the principle that the propagation conditions, while different across bands, typically retain some common properties, such as a common subset of reflectors. Using this assumption, the dissimilarities among bands due to different interference behaviour (e.g. co-channel and adjacent channel interference) can be resolved i.e., the bands can be cleaned (either successively or in parallel), using the properties of the signal as seen in a reference band. Reference band selection may be carried out by quality ranking of available aggregated bands.

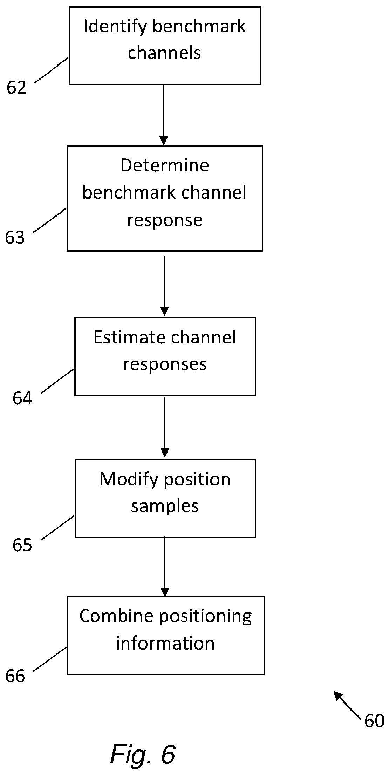

FIG. 6 is a flow chart showing an algorithm, indicated generally by the reference numeral 60, in accordance with an example embodiment. The algorithm 60 is an example implementation of the operation 44 of the algorithm 40.

The algorithm starts at operation 62, where samples of received positioning information (as received, for example, in the operation 42 of the algorithm, 40) are processed. The positioning information samples are obtained from each of a plurality of channels, each channel having a band identified by a carrier frequency. As discussed above, the positioning information could be sent as uplink, downlink or sidelink signals.

At the operation 62, one or more of said channels is/are identified as benchmark channels. A "benchmark channel" is defined herein as a channel that has a relatively high quality compared with non-benchmark channels. Quality may be determined in many different ways, such as considering Signal to Interference and Noise Ratio (SINR), Reference Signal Received Power (RSRP) or the like. Thus, all benchmark channels may have a higher determined quality than non-benchmark channels.

At operation 63, a benchmark channel response is determined for the/each benchmark channel. As discussed further below, the benchmark channel response is representative of channel propagation conditions for the respective benchmark channel. By way of example, a channel estimator module may be configured to determine the benchmark channel response for the or each benchmark channel.

A common benchmark channel response may be determined based on the benchmark channel response(s). The common benchmark channel response may exclude, reduce or otherwise compensate for at least some band-specific non-linearities of said benchmark channel responses. Such non-linearities may include Doppler shift, carrier frequency offset and other variables. Such non-linearities may, in some embodiments, be known; in other embodiments at least some of said non-linearities may be estimated or approximated based on past estimates and/or non-NR information (e.g. sensor data).

At operation 64, channel responses are estimated for some or all of the non-benchmark channels. The channel responses for the non-benchmark channels may be based on the common benchmark channel response described above. The estimated channel responses for some or all of the non-benchmark channels may be based, at least in part, on at least some band-specific non-linearities for the respective non-benchmark channels.

Thus, having removed band-specific non-linearities from one or more benchmark channels in order to generate a common benchmark channel response, band-specific non-linearities for the non-benchmark channels can be re-introduced in order to generate estimate channel response for non-benchmark channels.

At operation 65, positioning information samples of at least some of the non-benchmark channels may be modified based on differences between reconstructed positioning information samples derived using said estimated non-benchmark channel responses and received positioning information samples for the same channels. The modified channel response may be referred to as corrected positioning information samples.

At operation 66, the positioning information samples of said one or more benchmark channels and the one or more corrected positioning information samples (of said non-benchmark channels) are combined to generate combined positioning information samples.

The combined positioning information samples, as generated in the operation 66, may be used in the operation 46 of the algorithm 40 for determining a position estimate based on said combined positioning information samples.

Thus, the algorithm 60 seeks to generate positioning information based on positioning signals from benchmark channels and modified/cleaned positioning signals from non-benchmark channels.

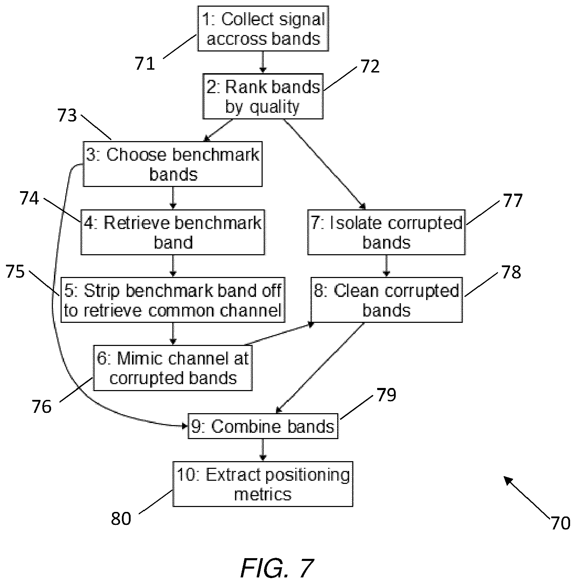

FIG. 7 is a flow chart showing an algorithm, indicated generally by the reference numeral 70, in accordance with an example embodiment. The algorithm 70 shows further details of an example implementation of the algorithm 60 described above.

The algorithm 70 starts at operation 71, where the signals from each of N aggregated bands are sampled at their respective rates and stored in memory.

At operation 72, the bands are ranked in order (e.g. decreasing order) of their determined quality, where quality may refer to the computed band SINR, RSRP, time of arrival, etc. Then, at operation 73, the first c (c≥1) ranked bands are selected as the benchmark/reference bands. The value for c may be fixed (so that there is a predefined number of benchmark channel, such as one benchmark channel) or selected in relation to a quality threshold i.e. a band is selected as a benchmark if the quality of the reception is above a given threshold. That threshold may be a fixed threshold, such that the number of benchmark channels may be variable. The remaining N-c bands are considered corrupted (the "non-benchmark channels" described above) and marked for cleaning (see operations 77 and 78 described below).

The operations 72 and 73 are therefore an example implementation of the operation 62 of the algorithm 60.

At operation 74, the benchmark channel(s) are retrieved. Then, at operation 75, a benchmark channel response is computed using the benchmark bands. Each channel response is representative of the propagation conditions in the respective band, including band-specific frequency and time offsets such as Doppler shift, carrier frequency offset, etc. Band-specific non-linearities are then removed from the benchmark channel in order to generate a simplified channel response.

The operations 74 and 75 are an example implementation of the operation 63 of the algorithm 60.

At operation 76, the channel response in the (N-c) corrupted (i.e. non-benchmark) bands is reconstructed by intentionally distorting the common response (as generated in the operation 75) using the time-frequency offsets specific to each corrupted/non-benchmark band. The operation 76 is therefore an example implementation of the operation 64 of the algorithm 60.

At operation 77, the corrupted/non-benchmark channels are isolated and, at operation 78, the reconstructed responses (tailored channel responses) generated in the operation 76 are used to approximate interference at each non-benchmark/corrupted band. The approximated interference is then removed from the received signals, thereby cleaning the corrupted bands.

The operations 77 and 78 are therefore example implementation of the operation 65 of the algorithm 60.

At operation 79, after all corrupted bands have been cleaned, they are re-aggregated with the benchmark bands e.g. the signal samples across bands are combined. Combining the positioning information samples of the benchmark channel(s) and the corrected positioning information samples may include one or more of averaging, superimposition and pruning of said samples (other methods for combining will be apparent to those of ordinary skill in the art). Note that if portions of a band (e.g. a subcarrier set) cannot be successfully cleaned (e.g. due to severe interference), these portions may be punctured and excluded from the subsequent combination operation, as discussed further below.

The operation 79 is therefore an example implementation of the operation 66 of the algorithm 60.

At operation 80, the signals as combined in the operation 79 are jointly used to collect the necessary positioning measurements.

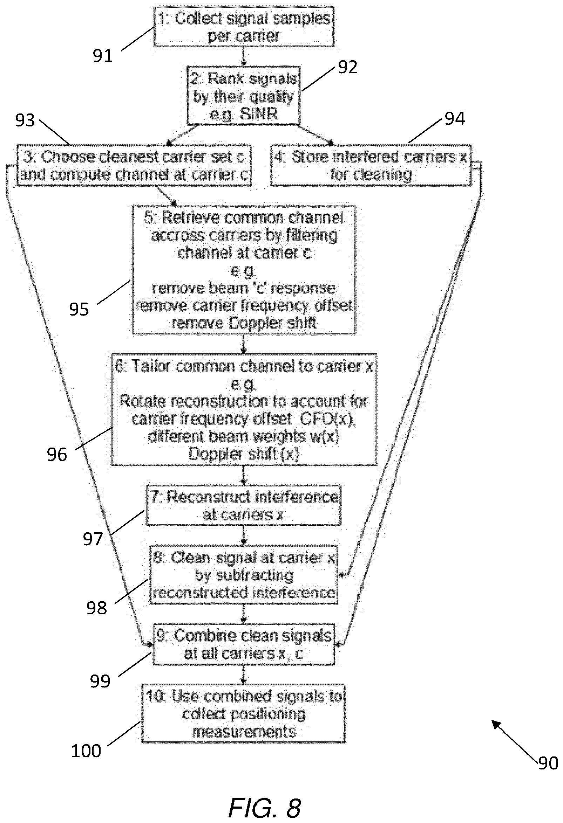

FIG. 8 is a flow chart showing an algorithm, indicated generally by the reference numeral 90, in accordance with an example embodiment. The algorithm 90 shows further details of an example implementation of the algorithm 60 described above and has many similarities with the algorithm 70 described above.

The algorithm 90 is applicable, for example, to a DL-CA scenario in which a UE is configured by an LMF to collect positioning measurements by combining PRS from N distinct carriers.

At operation 91, the relevant user device samples the signals at each band with their respective rates and stores them in memory.

Next, at operation 92, the N bands are ranked according to their quality as estimated by the target UE. This may be implemented by computing SINR, RSRP or the like and ordering the bands in decreasing order of their determined quality. The best c bands are then selected (at operation 93) as reference/benchmark bands and the data for remaining band are stored (at operation 94) for later clearing.

The value of "c" used in the operation 93 may be fixed by implementation e.g. c = 1, or variable and set in relation to a quality threshold e.g. by applying the rule: *select the first bands for which the quality > quality_threshold.*

Using the benchmark bands selected in the operation 93, a benchmark channel response may be computed by applying any available channel estimator. The benchmark channel response contains band-specific nonlinearities such as, but not limited to:

- Carrier frequency offset (CFO) in benchmark band k i.e, $f_o(k)$.
- Sampling time offset (STO), $t_o(k)$.
- Doppler shift, $f_d(k)$,
- Receive beam response, $w(k)$
- Receive beam offset, $w_o(k)$.

Note that some or all of these non-linearities may be known (e.g. having been estimated based on past measurements in the same band or having been set by the user device e.g., received beamformer gain) or can be approximated (e.g. using information about adjacent band offsets and the current band signal).

At operation 95, the UE combines the c benchmark channels:

$$h(k) = f_k\big(h_{common}, f_o(k), t_o(k), f_d(k), w(k), w_o(k)\big), \qquad k = 1:c$$

and retrieves a common channel response $h_{common}$. The combination maybe implemented by:

1. Removing non-linearities from each benchmark channel i.e. applying

$$\widetilde{h_{common}}(k) = f_k^{-1}\big(h(k), f_o(k), t_o(k), f_d(k), w(k), w_o(k)\big),$$

where $f_k$ is a known function rotating the common channel according to the detected offsets; and

2. Combining all common channel estimates $\widetilde{h_{common}}(k)$ into one response $\widetilde{h_{common}}$; this may be accomplished by using e.g. linear average, weighted average, superimposition (when common channel is returned as impulse response), etc.

At operation 96, the band-specific channel at each interference-corrupted bands (i.e. for the data stored in the operation 94) is reconstructed. The operations performed here are dual to the ones performed in the operation 95; for example, band-specific offsets may be applied back onto the estimated common channel $\widehat{h_{common}}$ :

$$\hat{h}(x) = f_x\left(\widehat{h_{common}}, f_o(k), t_o(k), f_d(k), w(k), w_o(k)\right).$$

At operation 97, the reconstructed x-band-specific channels are used to reconstruct an ideal signal per corrupted band x. The ideal signal is then compared with the received signals to estimate how the interference corrupts each band x. The reconstructed interference is used to clean the signal at each band x in operation 98.

At operation 99, the signals cleaned in operation 98 are combined with the benchmark signals identified in the operation 93. The signals combination at operation 99 may consist, for example, of concatenation, interleaving according to band, or any other operation representative of the time-frequency mapping of the signals.

It should be noted that the connection between the operations 94 and 99 may be omitted. In some example embodiments, it maybe useful to compare the cleaned and original versions of the carrier signals (e.g. to determine is sufficient improvement has occurred, and potentially to omit carriers where sufficient improvement has not occurred), but this is not essential to all example embodiments.

The combined signals are then jointly used (in operation 100) to collect positioning measurements such as time of arrival (TOA), angle of arrival (AOA), tap phase, line of sight (LOS) indication, etc.

In a variant of the algorithm 100 described above, the operations 96 and 97 may be extended to first assess whether the interference can be estimated with sufficient accuracy (such that the relevant carrier can be sufficiently well cleaned in operation 98). For example, the UE may assess the SINR (or some other noise level) and trigger the channel tailoring (in operation 96) and the interference reconstruction (in operation 97) only if the PRS SINR regime is medium/high (e.g. SINR>=0 dB). Otherwise, the UE may decide to discard the severely interfered resources of a particular band x (e.g. those subcarriers which have an SINR < PRS SINR), and use only the remaining ones for either cleaning (in operation 98) or combining with the clean carriers (the output of operation 97 output being provided to the operation 99 directly).

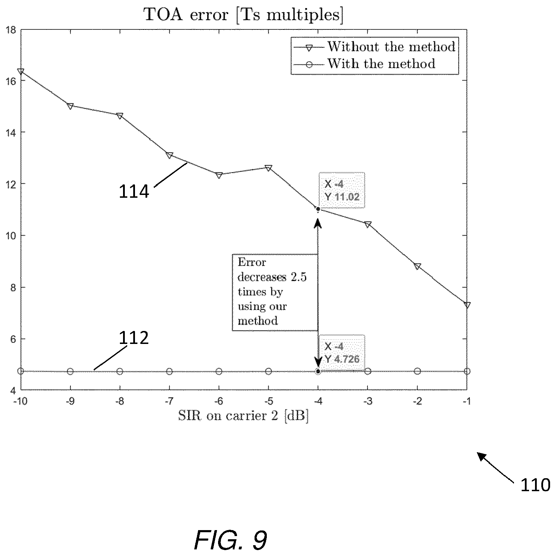

FIG. 9 is a plot, indicated generally by the reference numeral 110, showing a performance comparison between an example of an algorithm in accordance with an example embodiment (indicated generally by the reference numeral 112) and a known algorithm (indicated generally by the reference numeral 114).

The plot 112 is relatively flat, indicating that the non-benchmark/corrupted carriers are successfully cleaned. In contrast, the plot 114 shows significant performance degradation dependent on signal to interference ratio. Even in very low SIR regimes (shown on the left of the plot), the plot 112 successfully distinguishes between component carrier interference and PRS and shows a three orders of magnitude performance gain over the existing algorithm.

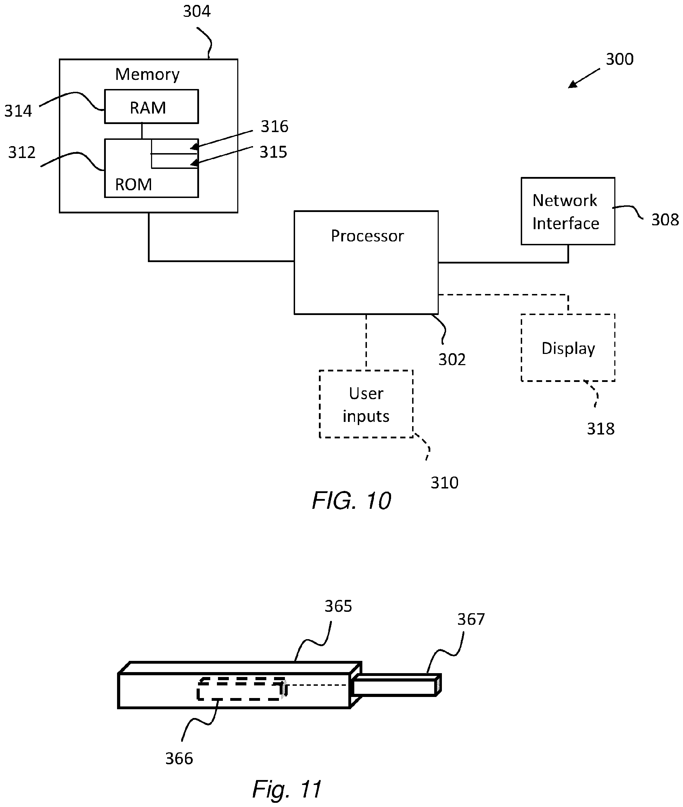

For completeness, FIG. 10 is a schematic diagram of components of one or more of the example embodiments described previously, which hereafter are referred to generically as a processing system 300. The processing system 300 may, for example, be (or may include) the apparatus referred to in the claims below.

The processing system 300 may have a processor 302, a memory 304 coupled to the processor and comprised of a random access memory (RAM) 314 and a read only memory (ROM) 312, and, optionally, a user input 310 and a display 318. The processing system 300 may comprise one or more network/apparatus interfaces 308 for connection to a network/apparatus, e.g. a modem which may be wired or wireless. The network/apparatus interface 308 may also operate as a connection to other apparatus such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the methods and algorithms 40, 60, 70 and 80 described above. Note that in the case of small device/apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts maybe all inside device/apparatus such as IoT device/apparatus i.e. embedded to very small size.

In some example embodiments, the processing system 300 may also be associated with external software applications. These maybe applications stored on a remote server device/apparatus and may run partly or exclusively on the remote server device/apparatus. These applications maybe termed cloud-hosted applications. The processing system 300 may be in communication with the remote server device/apparatus in order to utilize the software application stored there.

FIG. 11 shows tangible media, specifically a removable memory unit 365, storing computer-readable code which when run by a computer may perform methods according to example embodiments described above. The removable memory unit 365 may be a memory stick, e.g. a USB memory stick, having internal memory 366 for storing the computer-readable code. The internal memory 366 may be accessed by a computer system via a connector 367. Other forms of tangible storage media may be used. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions may be optional or may be combined. Similarly, it will also be appreciated that the flow diagrams of FIGS. 4, 6, 7 and 8 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

**Claims**

1. An apparatus comprising means for performing:

    obtaining samples of received positioning information from each of a plurality of channels, each channel having a band identified by a carrier frequency;
    identifying one or more of said channels as benchmark channels, wherein each benchmark channel has a higher determined quality than that of non-benchmark channels;
    determining a benchmark channel response representative of channel propagation conditions for the or each benchmark channel;
    generating a common benchmark channel response based on said benchmark channel responses;
    estimating channel responses for some or all of the non-benchmark channels, based, at least in part, on the common benchmark channel response;
    determining differences between reconstructed positioning information samples derived using said estimated non-benchmark channel responses and received positioning information samples for the same channels; modifying positioning information samples of at least some of the non-benchmark channels based on said determined differences to generate corrected positioning information samples; and combining the positioning information samples of said one or more benchmark channels and the one or more corrected positioning information samples to generate combined positioning information samples.

2. An apparatus as claimed in claim 1, further comprising means for performing:
determining a position estimate based on said combined positioning information samples.

3. An apparatus as claimed in claim 1 or claim 2, further comprising means for performing:
ranking said channels in decreasing order of determined quality.

4. An apparatus as claimed in any one of claims 1 to 3, wherein said benchmark channels comprise a predefined number of channels.

5. An apparatus as claimed in any one of claims 1 to 3, wherein said benchmark channels comprise all channels having a determined quality above a threshold quality.

6. An apparatus as claimed in any one of the preceding claims, further comprising a channel estimator module configured to determine the benchmark channel response for the or each benchmark channel.

7. An apparatus as claimed in any one of the preceding claims, wherein said common benchmark channel response excludes, reduces or compensates for at least some band-specific non-linearities of said benchmark channel responses.

8. An apparatus as claimed in any one of the preceding claims, wherein said estimated channel responses for some or all of the non-benchmark channels are based, at least in part, on at least some band-specific non-linearities for the respective non-benchmark channels.

9. An apparatus as claimed in any one of the preceding claims, wherein the means for performing combining the positioning information samples of said one or more benchmark channels and the corrected positioning information samples comprises means for performing one or more of averaging, superimposition and pruning of said samples.

10. An apparatus as claimed in any one of the preceding claims, wherein said positioning information comprises one of positioning reference signals and sounding reference signals.

11. An apparatus as claimed in any one of the preceding claims, wherein said channels comprise contiguous intra-band carriers.

12. An apparatus as claimed in any one of the preceding claims, further comprising means for performing:
omitting positioning information derived from one or more of said non-benchmark channels from said combined positioning information samples dependent on the quality of the respective non-benchmark channels.

13. An apparatus as claimed in any one of the preceding claims, wherein said apparatus is one of: a user equipment of a mobile communication system and a communication node of a mobile communication system.

14. A method comprising:

obtaining samples of received positioning information from each of a plurality of channels, each channel having a band identified by a carrier frequency;
identifying one or more of said channels as benchmark channels, wherein each benchmark channel has a higher determined quality than that of non-benchmark channels;
determining a benchmark channel response representative of channel propagation conditions for the or each benchmark channel;
generating a common benchmark channel response based on said benchmark channel responses;
estimating channel responses for some or all of the non-benchmark channels, based, at least in part, on the common benchmark channel response;
determining differences between reconstructed positioning information samples derived using said estimated non-benchmark channel responses and received positioning information samples for the same channels;

modifying positioning information samples of at least some of the non-benchmark channels based on said determined differences to generate corrected positioning information samples; and

combining the positioning information samples of said one or more benchmark channels and the one or more corrected positioning information samples to generate combined positioning information samples.

15. A computer implemented method comprising:

obtaining samples of received positioning information from each of a plurality of channels, each channel having a band identified by a carrier frequency;

identifying one or more of said channels as benchmark channels, wherein each benchmark channel has a higher determined quality than that of non-benchmark channels;

determining a benchmark channel response representative of channel propagation conditions for the or each benchmark channel;

generating a common benchmark channel response based on said benchmark channel responses;

estimating channel responses for some or all of the non-benchmark channels, based, at least in part, on the common benchmark channel response;

determining differences between reconstructed positioning information samples derived using said estimated non-benchmark channel responses and received positioning information samples for the same channels;

modifying positioning information samples of at least some of the non-benchmark channels based on said determined differences to generate corrected positioning information samples; and

combining the positioning information samples of said one or more benchmark channels and the one or more corrected positioning information samples to generate combined positioning information samples.

Node

12

UE

14

10

*Fig. 1*

Node

22

UE

24

20

*Fig. 2*

Node

32

UE

34

30

*Fig. 3*

Obtain positioning
data

42

Combine
positioning samples

44

Determine
position estimate

46

40

*Fig. 4*

52 | UE | ⟷ | UE | 54

52

50

*Fig. 5*

Identify benchmark
channels

62

Determine
benchmark channel
response

63

Estimate channel
responses

64

Modify position
samples

65

Combine positioning
information

66

60

*Fig. 6*

**FIG. 7**

FIG. 8

FIG. 9

FIG. 10

Fig. 11

EP 4 296 705 A1

Europäisches Patentamt
European Patent Office
Office européen des brevets

# EUROPEAN SEARCH REPORT

Application Number

EP 22 18 0988

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/016174 A1 (ANDERSON ROBERT J [US]) 23 January 2003 (2003-01-23) * paragraph [0061] - paragraph [0064] * * paragraph [0107] - paragraph [0112] * * paragraph [0334] - paragraph [0378] * * paragraph [0407] - paragraph [0410] * * figures 1-12 * * abstract * | 1-15 | INV. G01S5/02 |
| A | US 2022/078744 A1 (MANOLAKOS ALEXANDROS [US] ET AL) 10 March 2022 (2022-03-10) * paragraph [0115] - paragraph [0173] * * figures 1-16 * * abstract * | 1-15 | |
| A | US 2022/116906 A1 (GUMMADI BAPINEEDU CHOWDARY [IN] ET AL) 14 April 2022 (2022-04-14) * the whole document * | 1-15 | |
| A | US 2021/282107 A1 (HENRY JEROME [US] ET AL) 9 September 2021 (2021-09-09) * the whole document * | 1-15 | TECHNICAL FIELDS SEARCHED (IPC) G01S |

The present search report has been drawn up for all claims

| Place of search | Date of completion of the search | Examiner |
|---|---|---|
| Munich | 3 January 2023 | Galmiche, Aurélien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 0988

This annex lists the patent family members relating to the patent documents cited in the above-mentioned European search report.
The members are as contained in the European Patent Office EDP file on
The European Patent Office is in no way liable for these particulars which are merely given for the purpose of information.

03-01-2023

| Patent document cited in search report | | Publication date | Patent family member(s) | | Publication date |
|---|---|---|---|---|---|
| US 2003016174 | A1 | 23-01-2003 | AU | 2003258179 A1 | 25-02-2004 |
| | | | BR | 0313449 A | 12-07-2005 |
| | | | CA | 2494337 A1 | 19-02-2004 |
| | | | CN | 1675562 A | 28-09-2005 |
| | | | EP | 1535084 A2 | 01-06-2005 |
| | | | GB | 2408865 A | 08-06-2005 |
| | | | IL | 166746 A | 24-12-2009 |
| | | | JP | 4768076 B2 | 07-09-2011 |
| | | | JP | 2005536123 A | 24-11-2005 |
| | | | JP | 2011024251 A | 03-02-2011 |
| | | | KR | 20050032604 A | 07-04-2005 |
| | | | MX | PA05001656 A | 19-04-2005 |
| | | | US | 2003016174 A1 | 23-01-2003 |
| | | | WO | 2004015878 A2 | 19-02-2004 |
| US 2022078744 | A1 | 10-03-2022 | US | 2022078744 A1 | 10-03-2022 |
| | | | WO | 2022055679 A1 | 17-03-2022 |
| US 2022116906 | A1 | 14-04-2022 | TW | 202220477 A | 16-05-2022 |
| | | | US | 2022116906 A1 | 14-04-2022 |
| | | | WO | 2022076969 A1 | 14-04-2022 |
| US 2021282107 | A1 | 09-09-2021 | US | 2021282107 A1 | 09-09-2021 |
| | | | US | 2021377901 A1 | 02-12-2021 |

EPO FORM P0459

For more details about this annex : see Official Journal of the European Patent Office, No. 12/82